# EUROPÄISCHE PATENTSCHRIFT

(11) **EP 3 821 380 B1**
(45) Veröffentlichungstag und Bekanntmachung des Hinweises auf die Patenterteilung: **10.07.2024**
(21) Anmeldenummer: 19727619.9
(22) Anmeldetag: 24.05.2019
(51) Int. Cl.: G06Q 10/087

(54) **DATEN- UND/ODER KOMMANDOVORRICHTUNG**
DATA AND/OR COMMAND DEVICE
DISPOSITIF DE DONNÉES ET/OU DE COMMANDE

(30) Priorität: 11.07.2018 DE 102018211474
(43) Veröffentlichungstag der Anmeldung: 19.05.2021
(73) Patentinhaber: Robert Bosch GmbH, 70442 Stuttgart (DE)
(72) Erfinder: SCHADOW, Joachim, 70563 Stuttgart (DE); ESENWEIN, Florian, 70771 Leinfelden-Echterdingen (DE); STOCK, Joern, 70711 Leinfelden-Echterdingen (DE)
(86) Internationale Anmeldenummer: PCT/EP2019/063503
(87) Internationale Veröffentlichungsnummer: WO 2020/011441

(56) Entgegenhaltungen:
- WO-A1-2017/197409
- US-A1- 2010 265 061
- US-A1- 2014 062 700
- US-A1- 2018 146 267

## Beschreibung

### Stand der Technik

Die WO 2017/197409 A1 und US 2010/265061 A1 zeigen jeweils eine Datenvorrichtung mit einer Kommunikationseinheit zu einem Empfang einer ladefremden Gegenstandsinformation einer Elektroeinheit. Eine Steuereinheit der Datenvorrichtung ist dazu eingerichtet, in Abhängigkeit von einer Auswertung der ladefremden Gegenstandsinformation einen Hinweis auszugeben. Aus der US 2014/062700 A1 geht ferner eine Daten und/oder Kommandovorrichtung für Fahrzeuge hervor, bei der eine Steuer- oder Regeleinheit dazu eingerichtet ist, in Abhängigkeit von einer Auswertung der ladefremden Gegenstandsinformation und/oder einer Fahrzeuginformation einen Ladevorgang der Elektronikeinheit zu steuern oder zu regeln. Die US 2018/146267 A1 zeigt darüber hinaus eine Elektronikeinheit in Gestalt einer Handwerksmaschine, welche drahtlos mit einem externen Gerät (Computer) verbunden ist und bidirektional Daten, beispielsweise zur Steuerung der Maschine oder zur Übertragung des Ladezustands, austauscht.

### Offenbarung der Erfindung

Die Erfindung geht aus von einer Daten- und/oder Kommandovorrichtung für Fahrzeuge, mit zumindest einer Kommunikationseinheit zu einem Empfang zumindest einer ladefremden Gegenstandsinformation zumindest einer Elektroeinheit, insbesondere einer Handwerkzeugmaschine, welche die Elektroeinheit selbst bereitstellt, und zumindest einer Fahrzeuginformation zumindest eines Fahrzeugs, in dem die Elektroeinheit aufbewahrt ist, und mit zumindest einer Steuer- oder Regeleinheit, die dazu eingerichtet ist, in Abhängigkeit von einer Auswertung der ladefremden Gegenstandsinformation und der Fahrzeuginformation die Elektroeinheit zu steuern oder zu regeln. Es wird vorgeschlagen, dass die Steuer- oder Regeleinheit dazu eingerichtet ist, in Abhängigkeit von einer Auswertung der ladefremden Gegenstandsinformation und der Fahrzeuginformation einen Ladevorgang der Elektroeinheit zu steuern oder zu regeln und die Elektroeinheit zu einer Benutzung freizuschalten oder zu sperren.

Insbesondere ist die Steuer- oder Regeleinheit dazu eingerichtet, zumindest ein Ladegerät der Daten- und/oder Kommandovorrichtung und/oder zumindest ein externes Ladegerät zu einer Steuerung oder Regelung des Ladevorgangs der Elektroeinheit zu steuern oder zu regeln. Insbesondere kann die Steuer- oder Regeleinheit dazu eingerichtet sein, den Ladevorgang der Elektroeinheit in Abhängigkeit von einem Streckenprofil des Fahrzeugs zu steuern oder zu regeln, beispielsweise einen Energiespeicher der Elektroeinheit während einer Bergabfahrt des Fahrzeugs mittels rekuperierter Energie zu laden, den Ladevorgang der Elektroeinheit während eines Staus zu unterbrechen o. dgl. Vorzugsweise ist die Steuer- oder Regeleinheit dazu eingerichtet, den Ladevorgang der Elektroeinheit in Abhängigkeit einer Auswertung von Zeitparametern, Ortsparametern und/oder Auftragsinformationen zu steuern oder zu regeln. Vorteilhaft kann eine komfortable und effiziente Ladung von Elektroeinheiten ermöglicht werden. Ferner kann die Steuer- oder Regeleinheit dazu eingerichtet sein, in Abhängigkeit von einer in dem Fahrzeug befindlichen Person, insbesondere in Abhängigkeit einer Berechtigungsfreigabe der Person, in Abhängigkeit von einem Sensor, beispielsweise einer Kamera oder eines Bewegungsmelders, des Fahrzeugs, in Abhängigkeit von einer Bewegung des Fahrzeugs, in Abhängigkeit von einem Öffnen oder Schließen des Fahrzeugs o. dgl. die Elektroeinheit freizuschalten oder zu sperren. Alternativ oder zusätzlich zu einer Freischaltung oder Sperrung der Elektroeinheit ist die Steuer- oder Regeleinheit vorzugsweise dazu eingerichtet, einen Alarmhinweis auszugeben, einen Nutzer der Elektroeinheit zu identifizieren, beispielsweise anhand einer Smartphonekennung, einer Berechtigungskarte, einer Fahrzeugschlüsselkennung o. dgl., ein Video und/oder ein Bild des Nutzers aufzuzeichnen, und/oder einen Inventarabgleich des Fahrzeugs durchzuführen, insbesondere verknüpft mit Zeit- und/oder Ortsdaten und/oder einer Nutzerkennung. Vorteilhaft kann eine komfortable, insbesondere automatische, Autorisierung von Elektroeinheiten ermöglicht werden.

Unter einer "Steuer- oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuer- oder Regeleinheit kann insbesondere als ein Rechner, wie beispielsweise ein stationärer Computer, ein Laptop, ein Server o. dgl., als ein Mikrocontroller, als ein integrierter Schaltkreis oder als eine andere, einem Fachmann als sinnvoll erscheinende Steuer- oder Regeleinheit ausgebildet sein. Bevorzugt ist die Steuer- oder Regeleinheit zumindest teilweise als ein Gateway ausgebildet oder in einen Gateway integriert. Insbesondere kann die Daten- und/oder Kommandovorrichtung als ein Gateway ausgebildet sein. Vorzugsweise ist die Daten- und/oder Kommandovorrichtung, insbesondere die Steuer- oder Regeleinheit, einem Schwarm von Elektroeinheiten zugeordnet. Ein Schwarm von Elektroeinheiten ist insbesondere eine Mehrzahl von zusammengehörigen Elektroeinheiten, welche vorzugsweise einem Arbeitstrupp, einem Fahrzeug, einem Arbeitsprojekt o. dgl. zugeordnet ist. Vorzugsweise ist die Steuer- oder Regeleinheit dazu eingerichtet, ladefremde Gegenstandsinformationen einer Mehrzahl von Elektroeinheiten auszuwerten und/oder eine Mehrzahl von Elektroeinheiten zu steuern oder zu regeln. Unter "eingerichtet" soll insbesondere speziell programmiert, speziell ausgelegt und/oder speziell ausgestattet verstanden werden. Darunter, dass ein Objekt zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt.

Die Daten- und/oder Kommandovorrichtung, insbesondere die Steuer- oder Regeleinheit, ist vorzugsweise zu einer Anordnung in einer räumlichen Nähe zu der Elektroeinheit eingerichtet, wie beispielsweise in einem selben Fahrzeug, in einer selben Aufbewahrungseinheit, in einer selben Werkstatt o. dgl. wie die Elektroeinheit. Vorzugsweise ermöglicht eine Anordnung der Daten- und/oder Kommandovorrichtung in einer räumlichen Nähe zu der Elektroeinheit eine Kommunikation zwischen der Daten- und/oder Kommandovorrichtung und der Elektroeinheit über kurzreichweitige Kommunikationsverbindungen, wie beispielsweise Bluetooth, WLAN, NFC o. dgl. Die Daten- und/oder Kommandovorrichtung, insbesondere die Steuer- oder Regeleinheit, ist zu einem Einsatz, insbesondere einer Anordnung, in einem Fahrzeug eingerichtet. Insbesondere ist das Fahrzeug zu einem Transport der Elektroeinheit eingerichtet. Insbesondere kann die Daten- und/oder Kommandovorrichtung, insbesondere die Steuer- oder Regeleinheit, auch zu einem Einsatz, insbesondere einer Anordnung, in einer Aufbewahrungseinheit, in einer Werkstatt, auf einer Baustelle o. dgl. eingerichtet sein.

Die Kommunikationseinheit ist zu einem Empfang und/oder zu einem Versand von elektronischen Daten eingerichtet. Der Kommunikationseinheit wird die ladefremde Gegenstandsinformation der Elektroeinheit und/oder die Fahrzeuginformation in Form von elektronischen Daten bereitgestellt. Die Kommunikationseinheit ist bevorzugt als eine drahtlose Kommunikationseinheit ausgebildet. Insbesondere kann die Kommunikationseinheit als ein Funkmodul, als ein WLAN-Modul, als ein Bluetooth-Modul, als ein NFC-Modul oder als eine andere, einem Fachmann als sinnvoll erscheinende drahtlose Kommunikationseinheit ausgebildet sein. Alternativ ist denkbar, dass die Kommunikationseinheit als eine kabelgebundene Kommunikationseinheit ausgebildet ist, welche insbesondere eine Kabelverbindung, beispielsweise über ein Ethernetkabel o. dgl., zu einem Empfang und/oder Versand von elektronischen Daten aufweist. Die Kommunikationseinheit ist dazu eingerichtet, der Steuer- oder Regeleinheit die empfangenen elektronischen Daten, insbesondere die ladefremde Gegenstandsinformation und/oder die Fahrzeuginformation, bereitzustellen, insbesondere über eine kabelgebundene Datenleitung oder eine kabellose Datenleitung.

Die Elektroeinheit ist insbesondere als eine mit elektrischer Energie betreibbare Einheit ausgebildet. Vorzugsweise ist die Elektroeinheit als eine Werkzeugmaschine, insbesondere als eine Handwerkzeugmaschine, wie beispielsweise als eine Bohrmaschine, als ein Bohr- und/oder Meißelhammer, als ein Akkuschrauber, als eine Kreissäge, als ein Winkelschleifer, als eine Gartenbearbeitungsmaschine o. dgl., ausgebildet. Alternativ oder zusätzlich ist vorstellbar, dass die Elektroeinheit als ein von einer Werkzeugmaschine verschiedenes Elektrogerät, wie beispielsweise als ein Laptop, als ein Tablet, als ein Smartphone, als eine Digitalkamera o. dgl., ausgebildet ist. Vorzugsweise weist die Elektroeinheit zumindest eine, insbesondere zumindest im Wesentlichen analog zu der Kommunikationseinheit der Daten- und/oder Kommandovorrichtung ausgebildete, Kommunikationseinheit auf. Vorzugsweise ist die Kommunikationseinheit der Elektroeinheit dazu eingerichtet, der Daten- und/oder Kommandovorrichtung, insbesondere der Steuer- oder Regeleinheit über die Kommunikationseinheit der Daten- und/oder Kommandovorrichtung, die ladefremde Gegenstandsinformation bereitzustellen. Insbesondere ist die Steuer- oder Regeleinheit dazu eingerichtet, eine Mehrzahl von verschiedenen Elektroeinheiten, insbesondere zumindest im Wesentlichen gleichzeitig, zu steuern oder zu regeln.

Die ladefremde Gegenstandsinformation ist insbesondere eine Information über die Elektroeinheit, welche die Elektroeinheit selbst bereitstellt. Die ladefremde Gegenstandsinformation ist unabhängig von einer Ladung, insbesondere von einem Ladezustand und von einem Ladevorgang, der Elektroeinheit. Die ladefremde Gegenstandsinformation kann insbesondere als eine Betriebstemperatur der Elektroeinheit, als eine Drehzahl einer Antriebseinheit der Elektroeinheit, als eine Art eines an der Elektroeinheit angebrachten Einsatzwerkzeugs, als eine auf die Elektroeinheit einwirkende Kraft, insbesondere Bedienerkraft, als eine Beschleunigungskenngröße der Elektroeinheit, als eine Druckkenngröße der Elektroeinheit oder als eine andere, einem Fachmann als sinnvoll erscheinende ladefremde Gegenstandsinformation ausgebildet sein. Die Fahrzeuginformation betrifft insbesondere einen Transport der Elektroeinheit und/oder ein Fahrzeug, das zu einem Transport der Elektroeinheit ausgebildet ist. Die Fahrzeuginformation kann insbesondere als eine Transportgeschwindigkeit des Fahrzeugs, als eine Position eines die Elektroeinheit transportierenden Fahrzeugs, als eine Reichweite des Fahrzeugs, als ein Streckenprofil einer Route des Fahrzeugs, als ein Energieverbrauch, insbesondere Kraftstoffverbrauch, des Fahrzeugs oder als eine andere, einem Fachmann als sinnvoll erscheinende Fahrzeuginformation ausgebildet sein. Die Steuer- oder Regeleinheit ist dazu eingerichtet, die ladefremde Gegenstandsinformation und/oder die Fahrzeuginformation auszuwerten. Insbesondere kann die Steuer- oder Regeleinheit einen zu einer Auswertung der ladefremden Gegenstandsinformation und/oder der Fahrzeuginformation ausgebildeten Schaltkreis, ein in einer Speichereinheit der Steuer- oder Regeleinheit hinterlegtes Auswertungsprogramm o. dgl. aufweisen. Vorzugsweise ist die Steuer- oder Regeleinheit dazu eingerichtet, eine Kombination einer Mehrzahl von, insbesondere verschiedenen, ladefremden Gegenstandsinformation und/oder Fahrzeuginformationen, insbesondere einer Mehrzahl von Elektroeinheiten, auszuwerten. Bevorzugt ist die Steuer- oder Regeleinheit dazu eingerichtet, weitere Informationen, beispielsweise aus einem Planungssystem, insbesondere einem BIM (Building Infrastructure Model), von externen Sensoren, von einem Server o. dgl., auszuwerten.

Die Steuer- oder Regeleinheit ist bevorzugt dazu eingerichtet, in Abhängigkeit von einer Auswertung der ladefremden Gegenstandsinformation und/oder der Fahrzeuginformation eine Mehrzahl von Hinweisen auszugeben und/oder eine Mehrzahl von Elektroeinheiten zu steuern oder zu regeln. Der Hinweis kann insbesondere als ein Motivationshinweis, als ein Beladehinweis, als ein Alarmhinweis o. dgl. ausgebildet sein. Insbesondere ist der Hinweis als ein optischer, als ein akustischer und/oder als ein haptischer Hinweis ausgebildet. Vorzugsweise ist die Steuer- oder Regeleinheit dazu eingerichtet, den Hinweis mittelbar auszugeben, beispielhaft über eine Ausgabeeinheit der Daten- und/oder Kommandovorrichtung, wie beispielsweise einen Bildschirm, einen Lautsprecher, einen Vibrationsmotor o. dgl., oder über ein externes Gerät, beispielsweise ein Smartphone, ein Tablet, eine Virtual-Reality-Brille o. dgl. Eine Steuerung oder Regelung der Elektroeinheit kann insbesondere als eine Bereitschaftsprüfung, als ein Ladevorgang, als eine Freischaltung bzw. Sperrung o. dgl. ausgebildet sein.

Durch die erfindungsgemäße Ausgestaltung der Daten- und/oder Kommandovorrichtung kann vorteilhaft eine Überwachung und eine Steuerung oder Regelung von Elektroeinheiten, insbesondere in einem Fahrzeug, ermöglicht werden. Vorteilhaft kann eine komfortable, bedienerfreundliche und/oder motivierende Verwaltung, Steuerung oder Regelung von Elektroeinheiten, insbesondere in einem Fahrzeug und/oder zusammen mit einem Fahrzeug, ermöglicht werden.

Des Weiteren wird vorgeschlagen, dass die Steuer- oder Regeleinheit dazu eingerichtet ist, in Abhängigkeit von einer Auswertung der ladefremden Gegenstandsinformation und/oder der Fahrzeuginformation eine Bereitschaftsprüfung der Elektroeinheit durchzuführen. Eine hinsichtlich einer Bereitschaftsprüfung auszuwertende Fahrzeuginformation kann insbesondere als eine verbleibende Fahrtzeit bis zu einem Einsatzort, beispielsweise einer Baustelle, ausgebildet sein. Vorzugsweise ist die Steuer- oder Regeleinheit zu einer Bereitschaftsprüfung dazu eingerichtet, einen Ladezustand der Elektroeinheit, einen Wartungszustand der Elektroeinheit, zu einer Nutzung mit der Elektroeinheit vorhandene Einsatzwerkzeuge, eine letzte Sicherheitsüberprüfung der Elektroeinheit o. dgl. zu überprüfen. Vorzugsweise ist die Steuer- oder Regeleinheit zu einer Bereitschaftsprüfung in Abhängigkeit von einer Auswertung von auftragsbezogenen Informationen, beispielsweise eines zu einem Auftrag benötigten Typs einer Elektroeinheit, eingerichtet. Vorzugsweise ist die Steuer- oder Regeleinheit dazu eingerichtet, in Abhängigkeit von einem Ergebnis der Bereitschaftsprüfung die Elektroeinheit zu steuern oder zu regeln, beispielhaft einen Ladevorgang zu starten, und/oder einen Hinweis auszugeben, beispielhaft einen Warnhinweis. Vorteilhaft kann auf eine manuelle Bereitschaftsprüfung von Elektroeinheiten verzichtet werden. Vorteilhaft kann eine komfortable und bedienerfreundliche Bereitschaftsprüfung von Elektroeinheiten ermöglicht werden.

Weiterhin wird vorgeschlagen, dass die Steuer- oder Regeleinheit dazu eingerichtet ist, in Abhängigkeit von einer Auswertung der ladefremden Gegenstandsinformation und/oder der Fahrzeuginformation zumindest einen Motivationshinweis auszugeben. Vorzugsweise ist die Steuer- oder Regeleinheit zu einer Ausgabe des Motivationshinweises über die Ausgabeeinheit der Daten- und/oder Kommandovorrichtung, über ein externes Gerät und/oder über eine an der Elektroeinheit angeordnete Ausgabeeinheit eingerichtet. Der Motivationshinweis kann insbesondere als eine Anzeige und/oder Gutschrift von Bonuspunkten, als eine Gewährung einer Garantieverlängerung, als eine Bereitstellung eines Gutscheins, beispielsweise eines Servicegutscheins, als eine Übersicht über eine Einhaltung von Arbeitsvorgaben, als ein Benutzungsvergleich mit zumindest einem Kollegen, als eine Auszeichnung, beispielsweise als Handwerker des Monats, als ein Signal, als ein, insbesondere motivierender, Spruch, als eine Gewährung eines Rabatts, als eine Bereitstellung eines Upgrades, als eine Bereitstellung eines Testgeräts, als eine Einladung zu einer Veranstaltung, als eine Bereitstellung eines Geschenks, als eine Anwerbung, als ein Werbeträger oder als ein anderer, einem Fachmann als sinnvoll erscheinender Motivationshinweis ausgebildet sein. Eine hinsichtlich eines Motivationshinweises auszuwertende ladefremde Gegenstandsinformation kann insbesondere als eine Drehzahl, bei der die Elektroeinheit betrieben wird, eine Last, unter der die Elektroeinheit betrieben wird, ein Temperaturbereich, in dem die Elektroeinheit betrieben wird, o. dgl. ausgebildet sein. Eine hinsichtlich eines Motivationshinweises auszuwertende Fahrzeuginformation kann insbesondere als ein Beladungszustand des Fahrzeugs, als eine Beladungshäufigkeit des Fahrzeugs o. dgl. ausgebildet sein. Vorzugsweise ist die Steuer- oder Regeleinheit, insbesondere zu einer Ausgabe eines Motivationshinweises, dazu eingerichtet, eine Mehrzahl von ladefremden Gegenstandsinformationen und/oder Fahrzeuginformationen über einen vorbestimmten Zeitraum, beispielhaft eine Woche oder einen Monat, zu sammeln und auszuwerten. Vorteilhaft kann eine Daten- und/oder Kommandovorrichtung bereitgestellt werden, mittels der eine Motivation von Benutzern von Elektroeinheiten ermöglicht werden kann.

Zudem wird vorgeschlagen, dass die Steuer- oder Regeleinheit dazu eingerichtet ist, in Abhängigkeit von einer Auswertung der ladefremden Gegenstandsinformation und/oder der Fahrzeuginformation zumindest einen Beladehinweis auszugeben. Der Beladehinweis kann insbesondere als ein Hinweis ausgebildet sein, wo innerhalb des Fahrzeugs eine Anordnung der Elektroeinheit sinnvoll ist, beispielsweise in einem Ladegerät, als ein Hinweis, ob sämtliche für einen Auftrag benötigten Elektroeinheiten in dem Fahrzeug angeordnet sind oder ob Elektroeinheiten fehlen, o. dgl. Vorteilhaft kann eine korrekte, komfortable und/oder vollständige Beladung des Fahrzeugs ermöglicht werden.

Ferner wird vorgeschlagen, dass die Steuer- oder Regeleinheit dazu eingerichtet ist, in Abhängigkeit von einer Auswertung der ladefremden Gegenstandsinformation und/oder der Fahrzeuginformation zumindest eine Benutzungshistorie der Elektroeinheit und/oder des Fahrzeugs bereitzustellen. Die Benutzungshistorie kann insbesondere Informationen darüber umfassen, wann welches Fahrzeug mit welcher Elektroeinheit ausgestattet worden ist, welcher Nutzer welche Elektroeinheit aus dem Fahrzeug entnommen oder in das Fahrzeug eingeladen hat, aus welchem Grund ein Energiespeicher, insbesondere ein Akkumulator, einer Elektroeinheit entladen wurde, beispielsweise aufgrund einer Selbstentladung in Folge einer niedrigen Temperatur in dem Fahrzeug, o. dgl. Vorteilhaft kann ein Überblick über eine Benutzung der Elektroeinheit und/oder des Fahrzeugs ermöglicht werden.

Weiterhin geht die Erfindung aus von einem Daten- und/oder Kommandosystem mit zumindest einer Daten- und/oder Kommandovorrichtung, insbesondere einer erfindungsgemäßen Daten- und/oder Kommandovorrichtung, und mit zumindest einer Elektroeinheit, insbesondere einer Handwerkzeugmaschine.

Es wird vorgeschlagen, dass das Daten- und/oder Kommandosystem zumindest ein Fahrzeug zu einem Transport der Elektroeinheit umfasst, wobei das Fahrzeug zumindest eine Elektronikeinheit aufweist, die dazu eingerichtet ist, der Daten- und/oder Kommandovorrichtung zumindest eine Fahrzeuginformation des Fahrzeugs bereitzustellen. Insbesondere ist die Elektronikeinheit dazu eingerichtet, der Steuer- oder Regeleinheit, insbesondere über die Kommunikationseinheit der Daten- und/oder Kommandovorrichtung, die Fahrzeuginformation, insbesondere in Form von elektronischen Daten, bereitzustellen. Vorzugsweise ist das Fahrzeug als ein Straßenfahrzeug, beispielsweise als ein Van, als ein Kleintransporter, als ein LKW o. dgl., ausgebildet. Alternativ ist denkbar, dass das Fahrzeug als ein Zug, als ein Schiff, als ein Hubschrauber, als eine Drohne o. dgl. ausgebildet ist. Vorzugsweise weist das Fahrzeug einen Laderaum zu einer Aufbewahrung der Elektroeinheit auf. Vorzugsweise ist das Fahrzeug zu einem Transport von einer Mehrzahl von Elektroeinheiten, insbesondere eines Schwarms von Elektroeinheiten, vorgesehen. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Elektronikeinheit" soll insbesondere eine Einheit mit zumindest einer Steuerelektronik verstanden werden. Vorzugsweise ist die Elektronikeinheit als eine Fahrzeugelektronik des Fahrzeugs ausgebildet. Alternativ ist vorstellbar, dass das Fahrzeug eine separat von der Fahrzeugelektronik ausgebildete Elektronikeinheit aufweist. Insbesondere kann die Elektronikeinheit zumindest eine Sensoreinheit zu einer Erfassung der Fahrzeuginformation aufweisen. Vorzugsweise ist die Daten- und/oder Kommandovorrichtung an und/oder in dem Fahrzeug angeordnet. Alternativ ist denkbar, dass die Daten- und/oder Kommandovorrichtung separat von dem Fahrzeug angeordnet ist. Bevorzugt ist die Elektronikeinheit zu einer Bereitstellung der Fahrzeuginformation elektrisch leitend mit der Kommunikationseinheit und/oder mit der Steuer- oder Regeleinheit der Daten- und/oder Kommandovorrichtung verbunden. Alternativ ist vorstellbar, dass die Elektronikeinheit dazu eingerichtet ist, die Fahrzeuginformation drahtlos an die Daten- und/oder Kommandovorrichtung, insbesondere an die Kommunikationseinheit der Daten- und/oder Kommandovorrichtung, zu übertragen. Vorteilhaft können der Daten- und/oder Kommandovorrichtung direkt von dem Fahrzeug Fahrzeuginformationen bereitgestellt werden.

Zudem wird vorgeschlagen, dass das Fahrzeug als ein autonomes Fahrzeug ausgebildet ist, das zu einem autonomen Transport der Elektroeinheit in Abhängigkeit von einer Auswertung zumindest einer ladefremden Gegenstandsinformation der Elektroeinheit und/oder der Fahrzeuginformation vorgesehen ist. Vorzugsweise sind/ist die Steuer- oder Regeleinheit der Daten- und/oder Kommandovorrichtung und/oder die Elektronikeinheit des Fahrzeugs zu einer Auswertung der ladefremden Gegenstandsinformation und/oder der Fahrzeuginformation eingerichtet. Insbesondere ist das autonome Fahrzeug dazu eingerichtet, die Elektroeinheit selbstständig an einen Einsatzort, beispielsweise eine Baustelle, zu liefern. Vorzugsweise ist das autonome Fahrzeug zu einem tageszeitabhängigen und/oder nachfrageabhängigen Transport der Elektroeinheit eingerichtet. Eine hinsichtlich eines autonomen Transports der Elektroeinheit auszuwertende Fahrzeuginformation kann insbesondere als eine Durchschnittsgeschwindigkeit des Fahrzeugs, als ein Energieverbrauch des Fahrzeugs, als eine mittels des Fahrzeugs zusätzlich zu dem Transport der Elektroeinheit erbrachte Dienstleistung, beispielsweise ein Personentransport oder eine Essenslieferung, als ein gebuchter Auslieferungstarif o. dgl. ausgebildet sein. Vorteilhaft kann ein effizienter, insbesondere automatischer, Transport von Elektroeinheiten ermöglicht werden.

Des Weiteren geht die Erfindung aus von einem Daten- und/oder Kommandosystem, insbesondere von einem erfindungsgemäßen Daten- und/oder Kommandosystem, mit zumindest einer Daten- und/oder Kommandovorrichtung, insbesondere einer erfindungsgemäßen Daten- und/oder Kommandovorrichtung.

Es wird vorgeschlagen, dass das Daten- und/oder Kommandosystem zumindest eine Virtuelle-Realitätseinheit umfasst, die in Abhängigkeit von einer Auswertung zumindest einer ladefremden Gegenstandsinformation zumindest einer Elektroeinheit und/oder zumindest einer Fahrzeuginformation zumindest eines Fahrzeugs zu einer Hinweisausgabe in einer zumindest teilweise virtuellen Umgebung eingerichtet ist. Die Virtuelle-Realitätseinheit ist insbesondere zu einer Hinweisausgabe, insbesondere einer Motivationshinweisausgabe, in einer virtuellen Realität (virtual reality) und/oder in einer erweiterten Realität (augmented reality) eingerichtet. Insbesondere ist die Virtuelle-Realitätseinheit zu einer Hinweisausgabe in Abhängigkeit von einer von der Steuer- oder Regeleinheit durchgeführten Auswertung der ladefremden Gegenstandsinformation und/oder der Fahrzeuginformation eingerichtet. Vorzugsweise kann die Virtuelle-Realitätseinheit als eine Virtual-Reality-Brille, als ein Virtual-Reality-Helmvisier, als eine Augmented-Reality-Brille, als ein Augmented-Reality-Helmvisier, als ein Smartphone, insbesondere mit einer Kopfhalterung, o. dgl. ausgebildet sein. Bevorzugt weist die Virtuelle-Realitätseinheit zumindest eine, insbesondere drahtlose, Kommunikationseinheit zu einer Kommunikation mit der Daten- und/oder Kommandovorrichtung, insbesondere mit der Steuer- oder Regeleinheit über die Kommunikationseinheit der Daten- und/oder Kommandovorrichtung, auf. Vorzugsweise ist die Virtuelle-Realitätseinheit in Abhängigkeit von einer Auswertung der ladefremden Gegenstandsinformation und/oder der Fahrzeuginformation zu einer virtuellen Anzeige von Bonuspunkten, zu einer Überlagerung von Hinweisen mit einer realen Umgebung, beispielhaft zu erzielende Bonuspunkte durch Bearbeitung eines bestimmten Gegenstands, o. dgl. eingerichtet. Vorteilhaft kann eine plastische Hinweisausgabe, insbesondere zu einer Motivation, ermöglicht werden.

Vorzugsweise umfasst das Daten- und/oder Kommandosystem zumindest eine Befestigungsvorrichtung, die zu einer zumindest im Wesentlichen ortsfesten Befestigung der Daten- und/oder Kommandovorrichtung, insbesondere an einem Fahrzeug, vorgesehen ist. Vorzugsweise ist die Befestigungsvorrichtung dazu vorgesehen, die Daten- und/oder Kommandovorrichtung unter Einwirkung von Kräften, die beispielsweise bei einer Bewegung des Fahrzeugs auftreten, ortsfest zu befestigen. Bevorzugt ist die Befestigungsvorrichtung zu einer Befestigung der Daten- und/oder Kommandovorrichtung in einem Fahrzeug vorgesehen. Alternativ ist denkbar, dass die Befestigungsvorrichtung zu einer Befestigung der Daten- und/oder Kommandovorrichtung in einem Container, in einem Gebäude o. dgl. vorgesehen ist. Insbesondere ist die Befestigungsvorrichtung als eine Dockingstation ausgebildet, die zu einer, insbesondere kraft- und/oder formschlüssigen, Aufnahme der Daten- und/oder Kommandovorrichtung vorgesehen ist. Die Befestigungsvorrichtung weist insbesondere ein Volumen zwischen 5000 cm³ und 30000 cm³, bevorzugt ein Volumen zwischen 15 000 cm³ und 25 000 cm³ und besonders bevorzugt ein Volumen von 22 000 cm³ auf.

Vorzugsweise weist die Befestigungsvorrichtung zumindest eine Fixiereinheit auf, die dazu vorgesehen ist, zumindest einen Grundkörper der Befestigungsvorrichtung zumindest im Wesentlichen manipulationssicher an zumindest einer Oberfläche zu fixieren. Vorzugsweise ist eine Fixierung des Grundkörpers der Befestigungsvorrichtung durch die Fixiereinheit an der Oberfläche, insbesondere zerstörungsfrei, zumindest im Wesentlichen unlösbar oder nur durch Verwendung von Spezialwerkzeug lösbar. Der Grundkörper bildet vorzugsweise zumindest im Wesentlichen eine Dockingstation für die Daten- und/oder Kommandovorrichtung aus. Die Oberfläche kann insbesondere an einem Dach des Fahrzeugs, an einer Seitenwand eines Laderaums des Fahrzeugs, an einem Container o. dgl. angeordnet sein. Die Fixiereinheit kann insbesondere Schrauben zu einer Fixierung des Grundkörpers aufweisen, wobei Schraubenköpfe der Schrauben mittels Abdeckelementen zumindest im Wesentlichen unzugänglich abdeckbar sind. Die Fixiereinheit kann insbesondere zumindest einen Klebstoff, insbesondere einen Industrieklebstoff, zu einer stoffschlüssigen Verbindung des Grundkörpers mit der Oberfläche aufweisen. Die Fixiereinheit kann insbesondere zumindest ein Montageband, insbesondere einen Zurrgurt oder ein Metallmontageband, zu einer Fixierung des Grundkörpers aufweisen, wobei ein Verschluss des Montagebands in einem an der Befestigungsvorrichtung angeordneten Zustand der Daten- und/oder Kommandovorrichtung durch die Daten- und/oder Kommandovorrichtung zumindest im Wesentlichen unzugänglich verdeckt ist. Die Fixiereinheit kann insbesondere zumindest einen, insbesondere flächigen, Magneten zu einer Fixierung des Grundkörpers aufweisen.

Vorzugsweise ist die Befestigungsvorrichtung als ein Werkzeugkoffer ausgebildet, der zu einer Aufnahme der Daten- und/oder Kommandovorrichtung vorgesehen ist. Insbesondere ist der Werkzeugkoffer als ein verschließbarer Werkzeugkoffer ausgebildet. Vorzugsweise ist der Werkzeugkoffer in dem Fahrzeug, insbesondere zumindest im Wesentlichen ortsfest, anordenbar. Vorzugsweise ist der Werkzeugkoffer zumindest im Wesentlichen passgenau in einem, insbesondere in dem Fahrzeug angeordneten, Regal anordenbar.

Vorzugsweise weist die Befestigungsvorrichtung zumindest eine Diebstahlschutzeinheit auf, die zu einer Sicherung der Daten- und/oder Kommandovorrichtung an dem Grundkörper der Befestigungsvorrichtung vorgesehen ist. Bevorzugt umfasst die Diebstahlschutzeinheit zumindest eine Sicherungsleine, insbesondere Stahlsicherungsleine, die zu einer Sicherung der Daten- und/oder Kommandovorrichtung an dem Grundkörper der Befestigungsvorrichtung vorgesehen ist und die insbesondere mittels eines Schlosses der Diebstahlschutzeinheit abschließbar ist. Alternativ ist denkbar, dass die Diebstahlschutzeinheit zumindest eine Klammer, einen Haken o. dgl. umfasst, die/der zu einer Sicherung der Daten- und/oder Kommandovorrichtung an dem Grundkörper vorgesehen ist und die/der insbesondere mittels eines Schlosses der Diebstahlschutzeinheit und/oder elektrisch verriegelbar ist.

Vorzugsweise weist die Befestigungsvorrichtung zumindest eine Ladeeinheit auf, die dazu vorgesehen ist, die Daten- und/oder Kommandovorrichtung, insbesondere induktiv, zu laden. Die Ladeeinheit ist vorzugsweise zumindest teilweise in den Grundkörper der Befestigungsvorrichtung integriert ausgebildet. Bevorzugt ist die Ladeeinheit als ein induktives Ladegerät ausgebildet. Alternativ ist denkbar, dass die Ladeeinheit als ein konventionelles Ladegerät mit Ladekontakten ausgebildet ist. Vorzugsweise weist die Ladeeinheit einen integrierten Energiespeicher, wie beispielsweise einen Akkumulator, oder eine Netzversorgung, beispielsweise zu einer Versorgung aus einem Bordnetz des Fahrzeugs, auf.

Ferner geht die Erfindung aus von einem Verfahren zu einem Betrieb einer Daten- und/oder Kommandovorrichtung, insbesondere einer erfindungsgemäßen Daten- und/oder Kommandovorrichtung, und/oder zu einem Betrieb eines Daten- und/oder Kommandosystems, insbesondere eines erfindungsgemäßen Daten- und/oder Kommandosystems.

Es wird vorgeschlagen, dass in zumindest einem Verfahrensschritt in Abhängigkeit von einer Auswertung zumindest einer ladefremden Gegenstandsinformation zumindest einer Elektroeinheit, insbesondere einer Handwerkzeugmaschine, und/oder zumindest einer Fahrzeuginformation zumindest eines Fahrzeugs zumindest ein Hinweis ausgegeben wird und/oder die Elektroeinheit gesteuert oder geregelt wird, wobei die ladefremde Gegenstandsinformation eine Information über die Elektroeinheit ist, welche die Elektroeinheit selbst bereitstellt. Vorteilhaft kann ein Verfahren zu einer komfortablen, bedienerfreundlichen und/oder motivierenden Verwaltung, Steuerung oder Regelung von Elektroeinheiten, insbesondere in einem Fahrzeug und/oder zusammen mit einem Fahrzeug, bereitgestellt werden.

Die erfindungsgemäße Daten- und/oder Kommandovorrichtung, das erfindungsgemäße Daten- und/oder Kommandosystem und/oder das erfindungsgemäße Verfahren sollen/soll hierbei nicht auf die oben beschriebene Anwendung und Ausführungsform beschränkt sein. Insbesondere können/kann die erfindungsgemäße Daten- und/oder Kommandovorrichtung, das erfindungsgemäße Daten- und/oder Kommandosystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Daten- und/oder Kommandosystem in einer perspektivischen Darstellung,
- Fig. 2: eine erfindungsgemäße Daten- und/oder Kommandovorrichtung des erfindungsgemäßen Daten- und/oder Kommandosystems in einer perspektivischen Darstellung,
- Fig. 3: eine Befestigungsvorrichtung des erfindungsgemäßen Daten- und/oder Kommandosystems in einer schematischen Schnittdarstellung und
- Fig. 4: eine alternative Befestigungsvorrichtung des erfindungsgemäßen Daten- und/oder Kommandosystems in einer schematischen Darstellung.

### Beschreibung des Ausführungsbeispiels

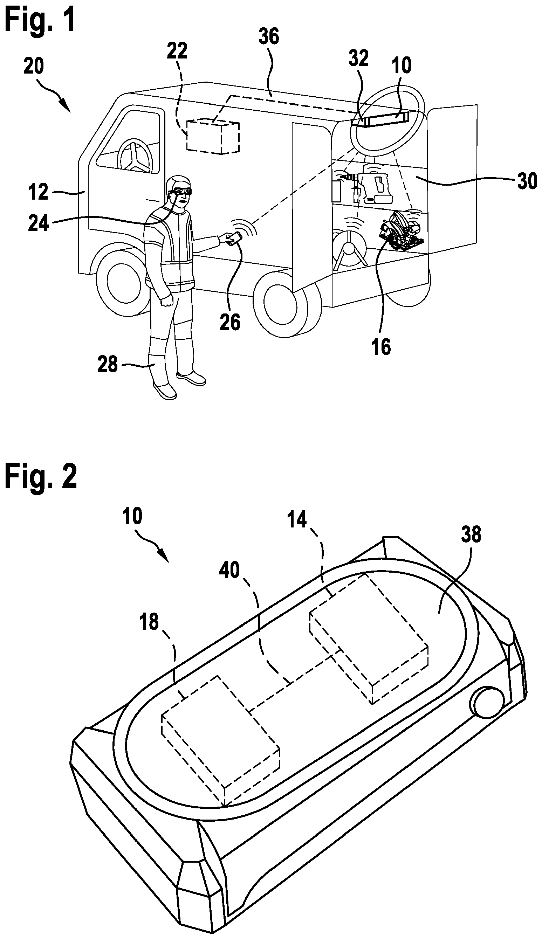

Figur 1 zeigt ein Daten- und/oder Kommandosystem 20 in einer perspektivischen Darstellung. Das Daten- und/oder Kommandosystem 20 umfasst eine Daten- und/oder Kommandovorrichtung 10, eine Elektroeinheit 16, ein Fahrzeug 12 und eine Virtuelle-Realitätseinheit 24. Alternativ ist denkbar, dass das Daten- und/oder Kommandosystem 20 lediglich die Daten- und/oder Kommandovorrichtung 10 und die Elektroeinheit 16 oder lediglich die Daten- und/oder Kommandovorrichtung 10, die Elektroeinheit 16 und entweder das Fahrzeug 12 oder die Virtuelle-Realitätseinheit 24 umfasst. Die Daten- und/oder Kommandovorrichtung 10, insbesondere für Fahrzeuge 12, umfasst zumindest eine Kommunikationseinheit 14 zu einem Empfang zumindest einer ladefremden Gegenstandsinformation zumindest einer Elektroeinheit 16, insbesondere einer Handwerkzeugmaschine, und/oder zumindest einer Fahrzeuginformation zumindest eines Fahrzeugs 12, in dem die Elektroeinheit 16 angeordnet ist. Die Daten- und/oder Kommandovorrichtung 10 umfasst zumindest eine Steuer- oder Regeleinheit 18, die dazu eingerichtet ist, in Abhängigkeit von einer Auswertung der ladefremden Gegenstandsinformation und/oder der Fahrzeuginformation zumindest einen Hinweis auszugeben und/oder die Elektroeinheit 16 zu steuern oder zu regeln (vgl. Figur 2).

Die Daten- und/oder Kommandovorrichtung 10 ist als ein Gateway ausgebildet. Die Daten- und/oder Kommandovorrichtung 10, insbesondere die Steuer- oder Regeleinheit 18, ist einem Schwarm von Elektroeinheiten 16 zugeordnet. Ein Schwarm von Elektroeinheiten 16 ist eine Mehrzahl von zusammengehörigen Elektroeinheiten 16, welche vorzugsweise einem Arbeitstrupp, dem Fahrzeug 12, einem Arbeitsprojekt o. dgl. zugeordnet ist. In dem Fahrzeug 12 ist eine Mehrzahl von Elektroeinheiten 16 angeordnet. Die Steuer- oder Regeleinheit 18 ist dazu eingerichtet, ladefremde Gegenstandsinformationen der Mehrzahl von Elektroeinheiten 16 auszuwerten und/oder die Mehrzahl von Elektroeinheiten 16 zu steuern oder zu regeln. Die Daten- und/oder Kommandovorrichtung 10, insbesondere die Steuer- oder Regeleinheit 18, ist zu einer Anordnung in einer räumlichen Nähe zu der Elektroeinheit 16 eingerichtet, wie beispielsweise in einem selben Fahrzeug 12, in einer selben Aufbewahrungseinheit, in einer selben Werkstatt o. dgl. wie die Elektroeinheit 16. Eine Anordnung der Daten- und/oder Kommandovorrichtung 10 in einer räumlichen Nähe zu der Elektroeinheit 16 ermöglicht eine Kommunikation zwischen der Daten- und/oder Kommandovorrichtung 10 und der Elektroeinheit 16 über kurzreichweitige Kommunikationsverbindungen, wie beispielsweise Bluetooth, WLAN, NFC o. dgl. Eine Kommunikation der Daten- und/oder Kommandovorrichtung 10 ist in Figur 1 durch einen Ring um die Daten- und/oder Kommandovorrichtung 10 und gestrichelte Linien zu verschiedenen Geräten angedeutet. Die Daten- und/oder Kommandovorrichtung 10, insbesondere die Steuer- oder Regeleinheit 18, ist zu einem Einsatz, insbesondere einer Anordnung, in dem Fahrzeug 12 eingerichtet. Das Fahrzeug 12 ist zu einem Transport der Elektroeinheit 16 eingerichtet. Alternativ oder zusätzlich ist denkbar, dass die Daten- und/oder Kommandovorrichtung 10, insbesondere die Steuer- oder Regeleinheit 18, zu einem Einsatz, insbesondere einer Anordnung, in einer Aufbewahrungseinheit, in einer Werkstatt, auf einer Baustelle o. dgl. eingerichtet ist. Die Kommunikationseinheit 14 ist zu einem Empfang und/oder zu einem Versand von elektronischen Daten eingerichtet. Der Kommunikationseinheit 14 werden/wird die ladefremde Gegenstandsinformation der Elektroeinheit 16 und/oder die Fahrzeuginformation in Form von elektronischen Daten bereitgestellt.

Die Elektroeinheit 16 ist als eine mit elektrischer Energie betreibbare Einheit ausgebildet. Die Elektroeinheit 16 ist als eine Werkzeugmaschine, insbesondere als eine Handwerkzeugmaschine, ausgebildet. In Figur 1 ist die Elektroeinheit 16 beispielhaft als eine Kreissäge ausgebildet. Die Elektroeinheit 16 kann aber auch als eine Bohrmaschine, als ein Bohr- und/oder Meißelhammer, als ein Ackuschrauber, als ein Winkelschleifer, als eine Gartenbearbeitungsmaschine o. dgl. ausgebildet sein. Alternativ oder zusätzlich ist vorstellbar, dass die Elektroeinheit 16 als ein von einer Werkzeugmaschine verschiedenes Elektrogerät, wie beispielsweise als ein Laptop, als ein Tablet, als ein Smartphone, als eine Digitalkamera o. dgl., ausgebildet ist. Die Elektroeinheit 16 weist zumindest eine, insbesondere zumindest im Wesentlichen analog zu der Kommunikationseinheit 14 der Daten- und/oder Kommandovorrichtung 10 ausgebildete, Kommunikationseinheit auf (hier nicht dargestellt). Die Kommunikationseinheit der Elektroeinheit 16 ist dazu eingerichtet, der Daten- und/oder Kommandovorrichtung 10, insbesondere der Steuer- oder Regeleinheit 18 über die Kommunikationseinheit 14 der Daten- und/oder Kommandovorrichtung 10, die ladefremde Gegenstandsinformation bereitzustellen. Die Steuer- oder Regeleinheit 18 ist dazu eingerichtet, eine Mehrzahl von verschiedenen Elektroeinheiten 16, insbesondere zumindest im Wesentlichen gleichzeitig, zu steuern oder zu regeln.

Die ladefremde Gegenstandsinformation ist eine Information über die Elektroeinheit 16, welche die Elektroeinheit 16 selbst bereitstellt. Die ladefremde Gegenstandsinformation ist unabhängig von einer Ladung, insbesondere von einem Ladezustand und von einem Ladevorgang, der Elektroeinheit 16. Die ladefremde Gegenstandsinformation kann als eine Betriebstemperatur der Elektroeinheit 16, als eine Drehzahl einer Antriebseinheit der Elektroeinheit 16, als eine Art eines an der Elektroeinheit 16 angebrachten Einsatzwerkzeugs, als eine auf die Elektroeinheit 16 einwirkende Kraft, insbesondere Bedienerkraft, als eine Beschleunigungskenngröße der Elektroeinheit 16, als eine Druckkenngröße der Elektroeinheit 16 oder als eine andere, einem Fachmann als sinnvoll erscheinende ladefremde Gegenstandsinformation ausgebildet sein. Die Fahrzeuginformation betrifft einen Transport der Elektroeinheit 16 und/oder das Fahrzeug 12, das zu einem Transport der Elektroeinheit 16 ausgebildet ist. Die Fahrzeuginformation kann als eine Transportgeschwindigkeit des Fahrzeugs 12, als eine Position des die Elektroeinheit 16 transportierenden Fahrzeugs 12, als eine Reichweite des Fahrzeugs 12, als ein Streckenprofil einer Route des Fahrzeugs 12, als ein Energieverbrauch, insbesondere Kraftstoffverbrauch, des Fahrzeugs 12 oder als eine andere, einem Fachmann als sinnvoll erscheinende Fahrzeuginformation ausgebildet sein. Die Steuer- oder Regeleinheit 18 ist dazu eingerichtet, die ladefremde Gegenstandsinformation und/oder die Fahrzeuginformation auszuwerten. Die Steuer- oder Regeleinheit 18 kann einen zu einer Auswertung der ladefremden Gegenstandsinformation und/oder der Fahrzeuginformation ausgebildeten Schaltkreis, ein in einer Speichereinheit der Steuer- oder Regeleinheit 18 hinterlegtes Auswertungsprogramm o. dgl. aufweisen. Die Steuer- oder Regeleinheit 18 ist dazu eingerichtet, eine Kombination einer Mehrzahl von, insbesondere verschiedenen, ladefremden Gegenstandsinformation und/oder Fahrzeuginformationen, insbesondere einer Mehrzahl von Elektroeinheiten 16, auszuwerten. Die Steuer- oder Regeleinheit 18 ist dazu eingerichtet, weitere Informationen, beispielsweise aus einem Planungssystem, insbesondere einem BIM (Building Infrastructure Model), von externen Sensoren, von einem Server o. dgl., auszuwerten.

Die Steuer- oder Regeleinheit 18 ist dazu eingerichtet, in Abhängigkeit von einer Auswertung der ladefremden Gegenstandsinformation und/oder der Fahrzeuginformation eine Mehrzahl von Hinweisen auszugeben und/oder eine Mehrzahl von Elektroeinheiten 16 zu steuern oder zu regeln. Der Hinweis kann als ein Motivationshinweis, als ein Beladehinweis, als ein Alarmhinweis o. dgl. ausgebildet sein. Der Hinweis ist als ein optischer, als ein akustischer und/oder als ein haptischer Hinweis ausgebildet. Die Steuer- oder Regeleinheit 18 ist dazu eingerichtet, den Hinweis mittelbar auszugeben, beispielhaft über eine Ausgabeeinheit der Daten- und/oder Kommandovorrichtung 10, wie beispielsweise einen Bildschirm, einen Lautsprecher, einen Vibrationsmotor o. dgl., oder über ein externes Gerät 26. Das externe Gerät 26, das in Figur 1 von einer Person 28 bedient wird, ist beispielsweise als ein Smartphone ausgebildet. Alternativ ist denkbar, dass das externe Gerät 26 als ein Tablet, als eine Virtual-Reality-Brille o. dgl. ausgebildet ist. Eine Steuerung oder Regelung der Elektroeinheit 16 kann als eine Bereitschaftsprüfung, als ein Ladevorgang, als eine Freischaltung bzw. Sperrung o. dgl. ausgebildet sein.

Die Steuer- oder Regeleinheit 18 ist dazu eingerichtet, in Abhängigkeit von einer Auswertung der ladefremden Gegenstandsinformation und/oder der Fahrzeuginformation eine Bereitschaftsprüfung der Elektroeinheit 16 durchzuführen. Eine hinsichtlich einer Bereitschaftsprüfung auszuwertende Fahrzeuginformation kann als eine verbleibende Fahrtzeit bis zu einem Einsatzort, beispielsweise einer Baustelle, ausgebildet sein. Die Steuer- oder Regeleinheit 18 ist zu einer Bereitschaftsprüfung dazu eingerichtet, einen Ladezustand der Elektroeinheit 16, einen Wartungszustand der Elektroeinheit 16, zu einer Nutzung mit der Elektroeinheit 16 vorhandene Einsatzwerkzeuge, eine letzte Sicherheitsüberprüfung der Elektroeinheit 16 o. dgl. zu überprüfen. Die Steuer- oder Regeleinheit 18 ist zu einer Bereitschaftsprüfung in Abhängigkeit von einer Auswertung von auftragsbezogenen Informationen, beispielsweise eines zu einem Auftrag benötigten Typs einer Elektroeinheit 16, eingerichtet. Die Steuer- oder Regeleinheit 18 ist dazu eingerichtet, in Abhängigkeit von einem Ergebnis der Bereitschaftsprüfung die Elektroeinheit 16 zu steuern oder zu regeln, beispielhaft einen Ladevorgang zu starten, und/oder einen Hinweis auszugeben, beispielhaft einen Warnhinweis.

Die Steuer- oder Regeleinheit 18 ist dazu eingerichtet, in Abhängigkeit von einer Auswertung der ladefremden Gegenstandsinformation und/oder der Fahrzeuginformation einen Ladevorgang der Elektroeinheit 16 zu steuern oder zu regeln. Die Steuer- oder Regeleinheit 18 ist dazu eingerichtet, zumindest ein Ladegerät der Daten- und/oder Kommandovorrichtung 10 und/oder zumindest ein externes Ladegerät zu einer Steuerung oder Regelung des Ladevorgangs der Elektroeinheit 16 zu steuern oder zu regeln. Die Steuer- oder Regeleinheit 18 kann dazu eingerichtet sein, den Ladevorgang der Elektroeinheit 16 in Abhängigkeit von einem Streckenprofil des Fahrzeugs 12 zu steuern oder zu regeln, beispielsweise einen Energiespeicher der Elektroeinheit 16 während einer Bergabfahrt des Fahrzeugs 12 mittels rekuperierter Energie zu laden, den Ladevorgang der Elektroeinheit 16 während eines Staus zu unterbrechen o. dgl. Die Steuer- oder Regeleinheit 18 ist dazu eingerichtet, den Ladevorgang der Elektroeinheit 16 in Abhängigkeit einer Auswertung von Zeitparametern, Ortsparametern und/oder Auftragsinformationen zu steuern oder zu regeln.

Die Steuer- oder Regeleinheit 18 ist dazu eingerichtet, in Abhängigkeit von einer Auswertung der ladefremden Gegenstandsinformation und/oder der Fahrzeuginformation zumindest einen Motivationshinweis auszugeben. Die Steuer- oder Regeleinheit 18 ist zu einer Ausgabe des Motivationshinweises über die Ausgabeeinheit der Daten- und/oder Kommandovorrichtung 10 (hier nicht weiter dargestellt), über das externe Gerät 26 und/oder über eine an der Elektroeinheit 16 angeordnete Ausgabeeinheit eingerichtet. Der Motivationshinweis kann als eine Anzeige und/oder Gutschrift von Bonuspunkten, als eine Gewährung einer Garantieverlängerung, als eine Bereitstellung eines Gutscheins, beispielsweise eines Servicegutscheins, als eine Übersicht über eine Einhaltung von Arbeitsvorgaben, als ein Benutzungsvergleich mit zumindest einem Kollegen, als eine Auszeichnung, beispielsweise als Handwerker des Monats, als ein Signal, als ein, insbesondere motivierender, Spruch, als eine Gewährung eines Rabatts, als eine Bereitstellung eines Upgrades, als eine Bereitstellung eines Testgeräts, als eine Einladung zu einer Veranstaltung, als eine Bereitstellung eines Geschenks, als eine Anwerbung, als ein Werbeträger oder als ein anderer, einem Fachmann als sinnvoll erscheinender Motivationshinweis ausgebildet sein. Eine hinsichtlich eines Motivationshinweises auszuwertende ladefremde Gegenstandsinformation kann als eine Drehzahl, bei der die Elektroeinheit 16 betrieben wird, eine Last, unter der die Elektroeinheit 16 betrieben wird, ein Temperaturbereich, in dem die Elektroeinheit 16 betrieben wird, o. dgl. ausgebildet sein. Eine hinsichtlich eines Motivationshinweises auszuwertende Fahrzeuginformation kann als ein Beladungszustand des Fahrzeugs 12, als eine Beladungshäufigkeit des Fahrzeugs 12 o. dgl. ausgebildet sein. Die Steuer- oder Regeleinheit 18 ist, insbesondere zu einer Ausgabe eines Motivationshinweises, dazu eingerichtet, eine Mehrzahl von ladefremden Gegenstandsinformationen und/oder Fahrzeuginformationen über einen vorbestimmten Zeitraum, beispielhaft eine Woche oder einen Monat, zu sammeln und auszuwerten.

Die Steuer- oder Regeleinheit 18 ist dazu eingerichtet, in Abhängigkeit von einer Auswertung der ladefremden Gegenstandsinformation und/oder der Fahrzeuginformation zumindest einen Beladehinweis auszugeben. Der Beladehinweis kann als ein Hinweis ausgebildet sein, wo innerhalb des Fahrzeugs 12 eine Anordnung der Elektroeinheit 16 sinnvoll ist, beispielsweise in einem Ladegerät, als ein Hinweis, ob sämtliche für einen Auftrag benötigten Elektroeinheiten 16 in dem Fahrzeug 12 angeordnet sind oder ob Elektroeinheiten 16 fehlen, o. dgl.

Die Steuer- oder Regeleinheit 18 ist dazu eingerichtet, in Abhängigkeit von einer Auswertung der ladefremden Gegenstandsinformation und/oder der Fahrzeuginformation die Elektroeinheit 16 zu einer Benutzung freizuschalten oder zu sperren. Die Steuer- oder Regeleinheit 18 kann dazu eingerichtet sein, in Abhängigkeit von einer in dem Fahrzeug 12 befindlichen Person 28, insbesondere in Abhängigkeit einer Berechtigungsfreigabe der Person 28, in Abhängigkeit von einem Sensor, beispielsweise einer Kamera oder eines Bewegungsmelders, des Fahrzeugs 12, in Abhängigkeit von einer Bewegung des Fahrzeugs 12, in Abhängigkeit von einem Öffnen oder Schließen des Fahrzeugs 12 o. dgl. die Elektroeinheit 16 freizuschalten oder zu sperren. Alternativ oder zusätzlich zu einer Freischaltung oder Sperrung der Elektroeinheit 16 ist die Steuer- oder Regeleinheit 18 dazu eingerichtet, einen Alarmhinweis auszugeben, einen Nutzer der Elektroeinheit 16 zu identifizieren, beispielsweise anhand einer Smartphonekennung, einer Berechtigungskarte, einer Fahrzeugschlüsselkennung o. dgl., ein Video und/oder ein Bild des Nutzers aufzuzeichnen, und/oder einen Inventarabgleich des Fahrzeugs 12 durchzuführen, insbesondere verknüpft mit Zeit- und/oder Ortsdaten und/oder einer Nutzerkennung.

Die Steuer- oder Regeleinheit 18 ist dazu eingerichtet, in Abhängigkeit von einer Auswertung der ladefremden Gegenstandsinformation und/oder der Fahrzeuginformation zumindest eine Benutzungshistorie der Elektroeinheit 16 und/oder des Fahrzeugs 12 bereitzustellen. Die Benutzungshistorie kann Informationen darüber umfassen, wann welches Fahrzeug 12 mit welcher Elektroeinheit 16 ausgestattet worden ist, welcher Nutzer welche Elektroeinheit 16 aus dem Fahrzeug 12 entnommen oder in das Fahrzeug 12 eingeladen hat, aus welchem Grund ein Energiespeicher, insbesondere ein Akkumulator, einer Elektroeinheit 16 entladen wurde, beispielsweise aufgrund einer Selbstentladung in Folge einer niedrigen Temperatur in dem Fahrzeug 12, o. dgl.

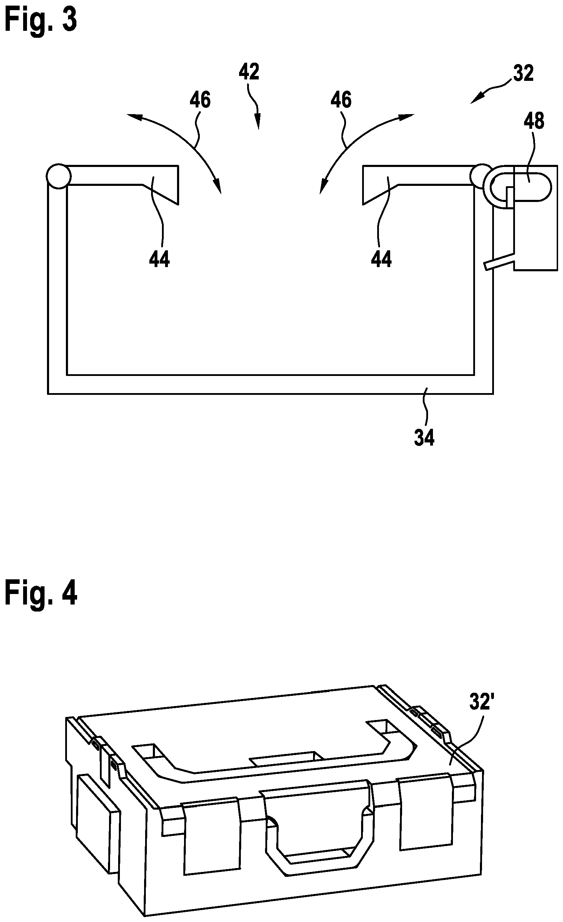

Das Daten- und/oder Kommandosystem 20 umfasst zumindest ein Fahrzeug 12 zu einem Transport der Elektroeinheit 16, wobei das Fahrzeug 12 zumindest eine Elektronikeinheit 22 aufweist, die dazu eingerichtet ist, der Daten- und/oder Kommandovorrichtung 10 zumindest eine Fahrzeuginformation des Fahrzeugs 12 bereitzustellen. Die Elektronikeinheit 22 ist dazu eingerichtet, der Steuer- oder Regeleinheit 18, insbesondere über die Kommunikationseinheit 14 der Daten- und/oder Kommandovorrichtung 10, die Fahrzeuginformation, insbesondere in Form von elektronischen Daten, bereitzustellen. Das Fahrzeug 12 ist als ein Straßenfahrzeug ausgebildet. Das Fahrzeug 12 ist als ein Van ausgebildet. Alternativ ist denkbar, dass das Fahrzeug 12 als ein von einem Van verschieden ausgebildetes Straßenfahrzeug, beispielsweise als ein Kleintransporter, als ein LKW o. dgl., oder als ein Zug, als ein Schiff, als ein Hubschrauber, als eine Drohne o. dgl. ausgebildet ist. Das Fahrzeug 12 weist einen Laderaum 30 zu einer Aufbewahrung der Elektroeinheit 16 auf. Das Fahrzeug 12 ist zu einem Transport von einer Mehrzahl von Elektroeinheiten 16, insbesondere eines Schwarms von Elektroeinheiten 16, vorgesehen. Die Elektronikeinheit 22 ist als eine Fahrzeugelektronik des Fahrzeugs 12 ausgebildet. Alternativ ist vorstellbar, dass das Fahrzeug 12 eine separat von der Fahrzeugelektronik ausgebildete Elektronikeinheit 22 aufweist. Die Elektronikeinheit 22 kann zumindest eine Sensoreinheit zu einer Erfassung der Fahrzeuginformation aufweisen (hier nicht weiter dargestellt). Die Daten- und/oder Kommandovorrichtung 10 ist an, insbesondere in, dem Fahrzeug 12 angeordnet. Die Daten- und/oder Kommandovorrichtung 10 ist mittels einer Befestigungsvorrichtung 32 des Daten- und/oder Kommandosystems 20 in dem Laderaum 30 des Fahrzeugs 12 angeordnet (vgl. Figur 3). Alternativ ist denkbar, dass die Daten- und/oder Kommandovorrichtung 10 separat von dem Fahrzeug 12 angeordnet ist. Die Elektronikeinheit 22 ist zu einer Bereitstellung der Fahrzeuginformation elektrisch leitend mit der Kommunikationseinheit 14 und/oder mit der Steuer- oder Regeleinheit 18 der Daten- und/oder Kommandovorrichtung 10 verbunden. Alternativ ist vorstellbar, dass die Elektronikeinheit 22 dazu eingerichtet ist, die Fahrzeuginformation drahtlos an die Daten- und/oder Kommandovorrichtung 10, insbesondere an die Kommunikationseinheit 14 der Daten- und/oder Kommandovorrichtung 10, zu übertragen.

Das Fahrzeug 12 ist als ein autonomes Fahrzeug ausgebildet, das zu einem autonomen Transport der Elektroeinheit 16 in Abhängigkeit von einer Auswertung zumindest einer ladefremden Gegenstandsinformation der Elektroeinheit 16 und/oder der Fahrzeuginformation vorgesehen ist. Alternativ ist denkbar, dass das Fahrzeug 12 als ein konventionelles, fremdgesteuertes Fahrzeug ausgebildet ist. Die Steuer- oder Regeleinheit 18 der Daten- und/oder Kommandovorrichtung 10 und/oder die Elektronikeinheit 22 des Fahrzeugs 12 sind/ist zu einer Auswertung der ladefremden Gegenstandsinformation und/oder der Fahrzeuginformation eingerichtet. Das Fahrzeug 12 ist dazu eingerichtet, die Elektroeinheit 16 selbstständig an einen Einsatzort, beispielsweise eine Baustelle, zu liefern. Das Fahrzeug 12 ist zu einem tageszeitabhängigen und/oder nachfrageabhängigen Transport der Elektroeinheit 16 eingerichtet. Eine hinsichtlich eines autonomen Transports der Elektroeinheit 16 auszuwertende Fahrzeuginformation kann als eine Durchschnittsgeschwindigkeit des Fahrzeugs 12, als ein Energieverbrauch des Fahrzeugs 12, als eine mittels des Fahrzeugs 12 zusätzlich zu dem Transport der Elektroeinheit 16 erbrachte Dienstleistung, beispielsweise ein Personentransport oder eine Essenslieferung, als ein gebuchter Auslieferungstarif o. dgl. ausgebildet sein.

Das Daten- und/oder Kommandosystem 20 umfasst zumindest eine Virtuelle-Realitätseinheit 24, die in Abhängigkeit von einer Auswertung zumindest einer ladefremden Gegenstandsinformation zumindest einer Elektroeinheit 16 und/oder zumindest einer Fahrzeuginformation zumindest eines Fahrzeugs 12 zu einer Hinweisausgabe in einer zumindest teilweise virtuellen Umgebung eingerichtet ist. Die Virtuelle-Realitätseinheit 24 ist zu einer Hinweisausgabe, insbesondere einer Motivationshinweisausgabe, in einer virtuellen Realität und/oder in einer erweiterten Realität eingerichtet. Die Virtuelle-Realitätseinheit 24 ist zu einer Hinweisausgabe in Abhängigkeit von einer von der Steuer- oder Regeleinheit 18 durchgeführten Auswertung der ladefremden Gegenstandsinformation und/oder der Fahrzeuginformation eingerichtet. Die Virtuelle-Realitätseinheit 24 ist als eine Augmented-Reality-Brille ausgebildet. Alternativ ist vorstellbar, dass die Virtuelle-Realitätseinheit 24 als eine Virtual-Reality-Brille, als ein Virtual-Reality-Helmvisier, als ein Augmented-Reality-Helmvisier, als ein Smartphone, insbesondere mit einer Kopfhalterung, o. dgl. ausgebildet ist. Die Virtuelle-Realitätseinheit 24 ist auf einem Gesicht der Person 28 angeordnet. Die Person 28 ist als ein Nutzer der Elektroeinheit 16, insbesondere als ein Handwerker, ausgebildet. Die Virtuelle-Realitätseinheit 24 weist zumindest eine, insbesondere drahtlose, Kommunikationseinheit zu einer Kommunikation mit der Daten- und/oder Kommandovorrichtung 10, insbesondere mit der Steuer- oder Regeleinheit 18 über die Kommunikationseinheit 14 der Daten- und/oder Kommandovorrichtung 10, auf (hier nicht weiter dargestellt). Die Virtuelle-Realitätseinheit 24 ist in Abhängigkeit von einer Auswertung der ladefremden Gegenstandsinformation und/oder der Fahrzeuginformation zu einer virtuellen Anzeige von Bonuspunkten, zu einer Überlagerung von Hinweisen mit einer realen Umgebung, beispielhaft zu erzielende Bonuspunkte durch Bearbeitung eines bestimmten Gegenstands, o. dgl. eingerichtet.

Das Daten- und/oder Kommandosystem 20 umfasst zumindest eine Befestigungsvorrichtung 32, die zu einer zumindest im Wesentlichen ortsfesten Befestigung der Daten- und/oder Kommandovorrichtung 10, insbesondere an einem Fahrzeug 12, vorgesehen ist. Die Befestigungsvorrichtung 32 ist dazu vorgesehen, die Daten- und/oder Kommandovorrichtung 10 unter Einwirkung von Kräften, die beispielsweise bei einer Bewegung des Fahrzeugs 12 auftreten, ortsfest zu befestigen. Die Befestigungsvorrichtung 32 ist zu einer Befestigung der Daten- und/oder Kommandovorrichtung 10 in dem Fahrzeug 12 vorgesehen. Alternativ ist denkbar, dass die Befestigungsvorrichtung 32 zu einer Befestigung der Daten- und/oder Kommandovorrichtung 10 in einem Container, in einem Gebäude o. dgl. vorgesehen ist. Die Befestigungsvorrichtung 32 ist als eine Dockingstation ausgebildet, die zu einer, insbesondere kraft- und/oder formschlüssigen, Aufnahme der Daten- und/oder Kommandovorrichtung 10 vorgesehen ist. Die Befestigungsvorrichtung 32 weist insbesondere ein Volumen zwischen 5000 cm³ und 30 000 cm³, bevorzugt ein Volumen zwischen 15 000 cm³ und 25 000 cm³ und besonders bevorzugt ein Volumen von 22 000 cm³ auf.

Die Befestigungsvorrichtung 32 weist zumindest eine Fixiereinheit auf, die dazu vorgesehen ist, zumindest einen Grundkörper 34 der Befestigungsvorrichtung 32 zumindest im Wesentlichen manipulationssicher an zumindest einer Oberfläche zu fixieren (hier nicht weiter dargestellt). Eine Fixierung des Grundkörpers 34 der Befestigungsvorrichtung 32 durch die Fixiereinheit an der Oberfläche ist, insbesondere zerstörungsfrei, zumindest im Wesentlichen unlösbar oder nur durch Verwendung von Spezialwerkzeug lösbar. Der Grundkörper 34 bildet zumindest im Wesentlichen eine Dockingstation für die Daten- und/oder Kommandovorrichtung 10 aus. Die Oberfläche ist als eine Innenseite eines Dachs 36 des Fahrzeugs 12 ausgebildet. Alternativ ist denkbar, dass die Oberfläche an einer Seitenwand des Laderaums 30 des Fahrzeugs 12, an einem Container o. dgl. angeordnet ist. Die Fixiereinheit kann Schrauben zu einer Fixierung des Grundkörpers 34 aufweisen, wobei Schraubenköpfe der Schrauben mittels Abdeckelementen zumindest im Wesentlichen unzugänglich abdeckbar sind. Die Fixiereinheit kann zumindest einen Klebstoff, insbesondere einen Industrieklebstoff, zu einer stoffschlüssigen Verbindung des Grundkörpers 34 mit der Oberfläche aufweisen. Die Fixiereinheit kann zumindest ein Montageband, insbesondere einen Zurrgurt oder ein Metallmontageband, zu einer Fixierung des Grundkörpers 34 aufweisen, wobei ein Verschluss des Montagebands in einem an der Befestigungsvorrichtung 32 angeordneten Zustand der Daten- und/oder Kommandovorrichtung 10 durch die Daten- und/oder Kommandovorrichtung 10 zumindest im Wesentlichen unzugänglich verdeckt ist. Die Fixiereinheit kann zumindest einen, insbesondere flächigen, Magneten zu einer Fixierung des Grundkörpers 34 aufweisen.

Die Befestigungsvorrichtung 32 weist zumindest eine Ladeeinheit auf, die dazu vorgesehen ist, die Daten- und/oder Kommandovorrichtung 10, insbesondere induktiv, zu laden (hier nicht weiter dargestellt). Die Ladeeinheit ist zumindest teilweise in den Grundkörper 34 der Befestigungsvorrichtung 32 integriert ausgebildet. Die Ladeeinheit ist als ein induktives Ladegerät ausgebildet. Alternativ ist denkbar, dass die Ladeeinheit als ein konventionelles Ladegerät mit Ladekontakten ausgebildet ist. Die Ladeeinheit weist einen integrierten Energiespeicher, wie beispielsweise einen Akkumulator, oder eine Netzversorgung, beispielsweise zu einer Versorgung aus einem Bordnetz des Fahrzeugs 12, auf.

Figur 2 zeigt die Daten- und/oder Kommandovorrichtung 10 des Daten- und/oder Kommandosystems 20 in einer perspektivischen Darstellung. Die Steuer- oder Regeleinheit 18 und die Kommunikationseinheit 14 sind innerhalb eines Gehäuses 38 der Daten- und/oder Kommandovorrichtung 10 angeordnet. Die Steuer- oder Regeleinheit 18 ist als ein Mikrocontroller ausgebildet. Alternativ ist denkbar, dass die Steuer- oder Regeleinheit 18 als ein Rechner, wie beispielsweise ein stationärer Computer, ein Laptop, ein Server o. dgl., als ein integrierter Schaltkreis o. dgl. ausgebildet ist. Die Steuer- oder Regeleinheit 18 ist in einen Gateway integriert. Alternativ ist denkbar, dass die Steuer- oder Regeleinheit 18 zumindest teilweise als ein Gateway ausgebildet ist.

Die Kommunikationseinheit 14 ist als eine drahtlose Kommunikationseinheit ausgebildet. Die Kommunikationseinheit 14 ist beispielhaft als ein Bluetooth-Modul ausgebildet. Alternativ ist vorstellbar, dass die Kommunikationseinheit 14 als ein Funkmodul, als ein WLAN-Modul, als ein NFC-Modul oder als eine kabelgebundene Kommunikationseinheit ausgebildet ist, welche eine Kabelverbindung, beispielsweise über ein Ethernetkabel o. dgl., zu einem Empfang und/oder Versand von elektronischen Daten aufweist. Die Kommunikationseinheit 14 ist dazu eingerichtet, der Steuer- oder Regeleinheit 18 die empfangenen elektronischen Daten, insbesondere die ladefremde Gegenstandsinformation und/oder die Fahrzeuginformation, bereitzustellen, insbesondere über eine kabelgebundene Datenleitung 40. Alternativ ist vorstellbar, dass die Kommunikationseinheit 14 dazu eingerichtet ist, der Steuer- oder Regeleinheit 18 die empfangenen elektronischen Daten über eine kabellose Datenleitung bereitzustellen.

Figur 3 zeigt die Befestigungsvorrichtung 32 des Daten- und/oder Kommandosystems 20 in einer schematischen Schnittdarstellung. Die Befestigungsvorrichtung 32 weist zumindest eine Diebstahlschutzeinheit 42 auf, die zu einer Sicherung der Daten- und/oder Kommandovorrichtung 10 an dem Grundkörper 34 der Befestigungsvorrichtung 32 vorgesehen ist. Die Daten- und/oder Kommandovorrichtung 10 ist der Übersichtlichkeit halber in Figur 3 nicht weiter dargestellt. Die Diebstahlschutzeinheit 42 umfasst zwei Haken 44, die zu einer Sicherung der Daten- und/oder Kommandovorrichtung 10 an dem Grundkörper 34 der Befestigungsvorrichtung 32 vorgesehen sind. Die Haken 44 sind, wie durch Richtungspfeile 46 angedeutet, zu einer Fixierung der Daten- und/oder Kommandovorrichtung 10 schwenkbar an dem Grundkörper 34 angeordnet. Die Diebstahlschutzeinheit 42 weist ein Schloss 48 auf, das zu einer Verriegelung der Haken 44 vorgesehen ist. Das Schloss 48 ist beispielhaft als ein mechanisches Schloss ausgebildet. Das Schloss 48 kann aber auch als ein elektrisches Schloss ausgebildet sein. Alternativ zu den Haken 44 kann die Diebstahlschutzeinheit 42 auch Klammern aufweisen. Weiterhin alternativ ist denkbar, dass die Diebstahlschutzeinheit 42 zumindest eine Sicherungsleine, insbesondere eine Stahlsicherungsleine, umfasst, die zu einer Sicherung der Daten- und/oder Kommandovorrichtung 10 an dem Grundkörper 34 der Befestigungsvorrichtung 32 vorgesehen ist und die mittels des Schlosses 48 der Diebstahlschutzeinheit 42 abschließbar ist.

Figur 4 zeigt eine alternative Befestigungsvorrichtung 32' des Daten- und/oder Kommandosystems 20 in einer perspektivischen Darstellung. Die Befestigungsvorrichtung 32' ist als ein Werkzeugkoffer ausgebildet, der zu einer Aufnahme der Daten- und/oder Kommandovorrichtung 10 vorgesehen ist. Die Befestigungsvorrichtung 32' ist als ein verschließbarer Werkzeugkoffer ausgebildet. Die Befestigungsvorrichtung 32' ist in dem Fahrzeug 12, insbesondere zumindest im Wesentlichen ortsfest, anordenbar. Die Befestigungsvorrichtung 32' ist zumindest im Wesentlichen passgenau in einem, insbesondere in dem Fahrzeug 12 angeordneten, Regal anordenbar.

Im Folgenden wird ein Verfahren zu einem Betrieb der Daten- und/oder Kommandovorrichtung 10 und/oder zu einem Betrieb des Daten- und/oder Kommandosystems 20 beschrieben. In zumindest einem Verfahrensschritt wird in Abhängigkeit von einer Auswertung zumindest einer ladefremden Gegenstandsinformation zumindest einer Elektroeinheit 16, insbesondere einer Handwerkzeugmaschine, und/oder zumindest einer Fahrzeuginformation zumindest eines Fahrzeugs 12 zumindest ein Hinweis ausgegeben und/oder die Elektroeinheit 16 gesteuert oder geregelt. Hinsichtlich weiterer Verfahrensschritte des Verfahrens zu einem Betrieb der Daten- und/oder Kommandovorrichtung 10 und/oder zu einem Betrieb des Daten- und/oder Kommandosystems 20 darf auf die vorhergehende Beschreibung der Daten- und/oder Kommandovorrichtung 10 und/oder des Daten- und/oder Kommandosystems 20 verwiesen werden, da diese Beschreibung analog auch auf das Verfahren zu lesen ist und somit alle Merkmale hinsichtlich der Daten- und/oder Kommandovorrichtung 10 und/oder hinsichtlich des Daten- und/oder Kommandosystems 20 auch in Bezug auf das Verfahren zu einem Betrieb der Daten- und/oder Kommandovorrichtung 10 und/oder zu einem Betrieb des Daten- und/oder Kommandosystems 20 als offenbart gelten.

## Patentansprüche

1. Daten- und/oder Kommandovorrichtung für Fahrzeuge (12), mit zumindest einer Kommunikationseinheit (14) zu einem Empfang zumindest einer ladefremden Gegenstandsinformation zumindest einer Elektroeinheit (16), insbesondere einer Handwerkzeugmaschine, welche die Elektroeinheit (16) selbst bereitstellt, und zumindest einer Fahrzeuginformation zumindest eines Fahrzeugs (12), in dem die Elektroeinheit (16) aufbewahrt ist, und mit zumindest einer Steuer- oder Regeleinheit (18), die dazu eingerichtet ist, in Abhängigkeit von einer Auswertung der ladefremden Gegenstandsinformation und der Fahrzeuginformation die Elektroeinheit (16) zu steuern oder zu regeln, **dadurch gekennzeichnet, dass** die Steuer- oder Regeleinheit (18) dazu eingerichtet ist, in Abhängigkeit von einer Auswertung der ladefremden Gegenstandsinformation und der Fahrzeuginformation einen Ladevorgang der Elektroeinheit (16) zu steuern oder zu regeln und die Elektroeinheit (16) zu einer Benutzung freizuschalten oder zu sperren.

2. Daten- und/oder Kommandovorrichtung nach Anspruch 1, **dadurch gekennzeichnet, dass** die Steuer- oder Regeleinheit (18) dazu eingerichtet ist, in Abhängigkeit von einer Auswertung der ladefremden Gegenstandsinformation und/oder der Fahrzeuginformation eine Bereitschaftsprüfung der Elektroeinheit (16) durchzuführen.

3. Daten- und/oder Kommandovorrichtung nach Anspruch 1 oder 2, **dadurch gekennzeichnet, dass** die Steuer- oder Regeleinheit (18) dazu eingerichtet ist, in Abhängigkeit von einer Auswertung der ladefremden Gegenstandsinformation und/oder der Fahrzeuginformation zumindest einen Motivationshinweis auszugeben.

4. Daten- und/oder Kommandovorrichtung nach einem der vorhergehenden Ansprüche, **dadurch gekennzeichnet, dass** die Steuer- oder Regeleinheit (18) dazu eingerichtet ist, in Abhängigkeit von einer Auswertung der ladefremden Gegenstandsinformation und/oder der Fahrzeuginformation zumindest einen Beladehinweis auszugeben.

5. Daten- und/oder Kommandovorrichtung nach einem der vorhergehenden Ansprüche, **dadurch gekennzeichnet, dass** die Steuer- oder Regeleinheit (18) dazu eingerichtet ist, in Abhängigkeit von einer Auswertung der ladefremden Gegenstandsinformation und/oder der Fahrzeuginformation zumindest eine Benutzungshistorie der Elektroeinheit (16) und/oder des Fahrzeugs (12) bereitzustellen.

6. Daten- und/oder Kommandosystem mit zumindest einer Daten- und/oder Kommandovorrichtung nach einem der vorhergehenden Ansprüche und mit zumindest einer Elektroeinheit (16), insbesondere einer Handwerkzeugmaschine, **gekennzeichnet durch** zumindest ein Fahrzeug (12) zu einem Transport der Elektroeinheit (16), wobei das Fahrzeug (12) zumindest eine Elektronikeinheit (22) aufweist, die dazu eingerichtet ist, der Daten- und/oder Kommandovorrichtung zumindest eine Fahrzeuginformation des Fahrzeugs (12) bereitzustellen.

7. Daten- und/oder Kommandosystem nach Anspruch 6, **dadurch gekennzeichnet, dass** das Fahrzeug (12) als ein autonomes Fahrzeug ausgebildet ist, das zu einem autonomen Transport der Elektroeinheit (16) in Abhängigkeit von einer Auswertung zumindest einer ladefremden Gegenstandsinformation der Elektroeinheit (16) und/oder der Fahrzeuginformation vorgesehen ist, wobei die ladefremde Gegenstandsinformation eine Information über die Elektroeinheit (16) ist, welche die Elektroeinheit selbst bereitstellt.

8. Daten- und/oder Kommandosystem nach Anspruch 6 oder 7 mit zumindest einer Daten- und/oder Kommandovorrichtung nach einem der Ansprüche 1 bis 5, **gekennzeichnet durch** zumindest eine Virtuelle-Realitätseinheit (24), die in Abhängigkeit von einer Auswertung zumindest einer ladefremden Gegenstandsinformation zumindest einer Elektroeinheit (16) und/oder zumindest einer Fahrzeuginformation zumindest eines Fahrzeugs (12) zu einer Hinweisausgabe in einer zumindest teilweise virtuellen Umgebung eingerichtet ist, wobei die ladefremde Gegenstandsinformation eine Information über die Elektroeinheit (16) ist, welche die Elektroeinheit (16) selbst bereitstellt.

9. Verfahren zu einem Betrieb einer Daten- und/oder Kommandovorrichtung nach einem der Ansprüche 1 bis 5 und/oder zu einem Betrieb eines Daten- und/oder Kommandosystems nach einem der Ansprüche 6 bis 8, **dadurch gekennzeichnet, dass** in zumindest einem Verfahrensschritt in Abhängigkeit von einer Auswertung zumindest einer ladefremden Gegenstandsinformation zumindest einer Elektroeinheit (16), insbesondere einer Handwerkzeugmaschine, und/oder zumindest einer Fahrzeuginformation zumindest eines Fahrzeugs (12) zumindest ein Hinweis ausgegeben wird und/oder die Elektroeinheit (16) gesteuert oder geregelt wird, wobei die ladefremde Gegenstandsinformation eine Information über die Elektroeinheit (16) ist, welche die Elektroeinheit (16) selbst bereitstellt.

## Claims

1. Data and/or command device for vehicles (12), comprising at least one communication unit (14) for receiving at least one item of non-charging-related object information pertaining to at least one electrical unit (16), in particular a hand-held power tool, which the electrical unit (16) itself provides, and at least one item of vehicle information pertaining to at least one vehicle (12) in which the electrical unit (16) is arranged, and having at least one control or regulating unit (18) which is configured to take an evaluation of the item of non-charging-related object information and the item of vehicle information as a basis for controlling or regulating the electrical unit (16), **characterized in that** the control or regulating unit (18) is configured to take an evaluation of the item of non-charging-related object information and the item of vehicle information as a basis for controlling or regulating a charging operation of the electrical unit (16) and enabling or disabling the electrical unit (16) for use.

2. Data and/or command device according to Claim 1, **characterized in that** the control or regulating unit (18) is configured to take an evaluation of the item of non-charging-related object information and/or the item of vehicle information as a basis for carrying out a readiness check on the electrical unit (16).

3. Data and/or command device according to Claim 1 or 2, **characterized in that** the control or regulating unit (18) is configured to take an evaluation of the item of non-charging-related object information and/or the item of vehicle information as a basis for outputting at least one motivational alert.

4. Data and/or command device according to one of the preceding claims, **characterized in that** the control or regulating unit (18) is configured to take an evaluation of the item of non-charging-related object information and/or the item of vehicle information as a basis for outputting at least one charging alert.

5. Data and/or command device according to one of the preceding Claims, **characterized in that** the control or regulating unit (18) is configured to take an evaluation of the item of non-charging-related object information and/or the item of vehicle information as a basis for providing at least one use history of the electrical unit (16) and/or the vehicle (12).

6. Data and/or command system comprising at least one data and/or command device according to one of the preceding claims and comprising at least one electrical unit (16), in particular a hand-held power tool, **characterized by** at least one vehicle (12) for transporting the electrical unit (16), wherein the vehicle (12) comprises at least one electronics unit (22) which is configured to provide the data and/or command device with at least one item of vehicle information pertaining to the vehicle (12).

7. Data and/or command system according to Claim 6, **characterized in that** the vehicle (12) is in the form of an autonomous vehicle which is provided for autonomous transport of the electrical unit (16) on the basis of an evaluation of at least one item of non-charging-related object information pertaining to the electrical unit (16) and/or the item of vehicle information, wherein the item of non-charging-related object information is information about the electrical unit (16) which the electrical unit itself provides.

8. Data and/or command system according to Claim 6 or 7, comprising at least one data and/or command device according to one of Claims 1 to 5, **characterized by** at least one virtual reality unit (24) which is configured to take an evaluation of at least one item of non-charging-related object information pertaining to at least one electrical unit (16) and/or at least one item of vehicle information pertaining to at least one vehicle (12) as a basis for outputting an alert in an at least partially virtual environment, wherein the item of non-charging-related information is information about the electrical unit (16) which the electrical unit (16) itself provides.

9. Method for operating a data and/or command device according to one of Claims 1 to 5 and/or for operating a data and/or command system according to one of Claims 6 to 8, **characterized in that** at least one method step comprises taking an evaluation of at least one item of non-charging-related object information pertaining to at least one electrical unit (16), in particular a hand-held power tool, and/or at least one item of vehicle information pertaining to at least one vehicle (12) as a basis for outputting at least one alert and/or controlling or regulating the electrical unit (16), wherein the item of non-charging-related information is information about the electrical unit (16) which the electrical unit (16) itself provides.

## Revendications

1. Dispositif de données et/ou de commande pour véhicules (12), comprenant au moins une unité de communication (14) pour recevoir au moins une information d'objet non liée à la charge d'au moins une unité électrique (16), en particulier d'une machine-outil à main, que l'unité électrique (16) fournit elle-même, et au moins une information de véhicule d'au moins un véhicule (12) dans lequel est rangée l'unité électrique (16), et comprenant au moins une unité de commande ou de régulation (18) qui est conçue pour commander ou réguler l'unité électrique (16) en fonction d'une évaluation de l'information d'objet non liée à la charge et de l'information de véhicule, **caractérisé en ce que** l'unité de commande ou de régulation (18) est conçue pour commander ou réguler un processus de charge de l'unité électrique (16), en fonction d'une évaluation de l'information d'objet non liée à la charge et de l'information de véhicule, et pour libérer ou bloquer l'unité électrique (16) pour l'utilisation.

2. Dispositif de données et/ou de commande selon la revendication 1, **caractérisé en ce que** l'unité de commande ou de régulation (18) est conçue pour effectuer un contrôle de disponibilité de l'unité électrique (16), en fonction d'une évaluation de l'information d'objet non liée à la charge et/ou de l'information de véhicule.

3. Dispositif de données et/ou de commande selon la revendication 1 ou 2, **caractérisé en ce que** l'unité de commande ou de régulation (18) est conçue pour émettre une indication de motivation, en fonction d'une évaluation de l'information d'objet non liée à la charge et/ou de l'information de véhicule.

4. Dispositif de données et/ou de commande selon l'une quelconque des revendications précédentes, **caractérisé en ce que** l'unité de commande ou de régulation (18) est conçue pour émettre une indication de chargement, en fonction d'une évaluation de l'information d'objet non liée à la charge et/ou de l'information de véhicule.

5. Dispositif de données et/ou de commande selon l'une quelconque des revendications précédentes, **caractérisé en ce que** l'unité de commande ou de régulation (18) est conçue pour fournir au moins un historique d'utilisation de l'unité électrique (16) et/ou du véhicule (12), en fonction d'une évaluation de l'information d'objet non liée à la charge et/ou de l'information de véhicule.

6. Unité de données et/ou de commande, comprenant au moins un dispositif de données et/ou de commande selon l'une quelconque des revendications précédentes et au moins une unité électrique (16), en particulier une machine-outil à main, **caractérisée par** au moins un véhicule (12) pour transporter l'unité électrique (16), dans laquelle le véhicule (12) présente au moins une unité électronique (22) qui est conçue pour fournir au dispositif de données et/ou de commande au moins une information de véhicule du véhicule (12).

7. Système de données et/ou de commande selon la revendication 6, **caractérisé en ce que** le véhicule (12) est réalisé en tant que véhicule autonome qui est prévu pour un transport autonome de l'unité électrique (16), en fonction d'une évaluation d'au moins une information d'objet non liée à la charge de l'unité électrique (16) et/ou de l'information de véhicule, dans lequel l'information d'objet non liée à la charge est une information concernant l'unité électrique (16) que l'unité électrique fournit elle-même.

8. Système de données et/ou de commande selon la revendication 6 ou 7, comprenant au moins un dispositif de données et/ou de commande selon l'une quelconque des revendications 1 à 5, **caractérisé par** au moins une unité de réalité virtuelle (24) qui est conçue pour émettre une indication dans un environnement au moins partiellement virtuel, en fonction d'une évaluation d'au moins une information d'objet non liée à la charge d'au moins une unité électrique (16) et/ou d'au moins une information de véhicule d'au moins un véhicule (12), dans lequel l'information d'objet non liée à la charge est une information concernant l'unité électrique (16) que l'unité électrique (16) fournit elle-même.

9. Procédé permettant de faire fonctionner un dispositif de données et/ou de commande selon l'une quelconque des revendications 1 à 5 et/ou de faire fonctionner un système de données et/ou de commande selon l'une quelconque des revendications 6 à 8, **caractérisé en ce que** dans au moins une étape de procédé, en fonction d'une évaluation d'au moins une information d'objet non liée à la charge d'au moins une unité électrique (16), en particulier d'une machine-outil à main, et/ou d'au moins une information de véhicule d'au moins un véhicule (12), une indication est émise et/ou l'unité électrique (16) est commandée ou régulée, dans lequel l'information d'objet non liée à la charge est une information concernant l'unité électrique (16) que l'unité électrique (16) fournit elle-même.
